# EUROPEAN PATENT APPLICATION

(11) **EP 4 542 368 A1**
(43) Date of publication of application: **23.04.2025**
(21) Application number: 23876474.0
(22) Date of filing: 18.09.2023
(51) Int. Cl.: G06F 3/14

(54) **MULTI-SCREEN OPERATION METHOD, ELECTRONIC DEVICE AND STORAGE MEDIUM**

(30) Priority: 14.10.2022 CN 202211262108
(71) Applicant: Huawei Technologies Co., Ltd., Shenzhen, Guangdong 518129 (CN)
(72) Inventor: BAO, Kunchao, Shenzhen, Guangdong 518129 (CN)
(74) Representative: Isarpatent
(86) International application number: PCT/CN2023/119461
(87) International publication number: WO 2024/078269

(57) **Abstract**

This application relates to an electronic device, a multi-screen running method of the electronic device, and a storage medium. The multi-screen running method includes: allocating a first running environment and a second running environment to the electronic device and displaying the first running environment and the second running environment on a first screen and a second screen; installing a first application on the electronic device; and when the first application is configured in both the first running environment and the second running environment, respectively displaying a first icon of the first application and a second icon of the first application in the first running environment and the second running environment. The first icon is used to start the first application in the first running environment. The second icon is used to start the first application in the second running environment. After the first screen and the second screen of a head unit are turned on, desktops of the first running environment and the second running environment that correspond to the first screen and the second screen may be separately rendered and displayed. When the same first application runs in the first running environment and the second running environment, the same first application on the first screen and the second screen may simultaneously display different display content.

## Description

This application claims priority to Chinese Patent Application No. 202211262108.9, filed with the China National Intellectual Property Administration on October 14, 2022 and entitled "MULTI-SCREEN RUNNING METHOD, ELECTRONIC DEVICE, AND STORAGE MEDIUM", which is incorporated herein by reference in its entirety.

### TECHNICAL FIELD

This application relates to the field of terminal device technologies, and in particular, to a multi-screen running method, an electronic device, and a storage medium.

### BACKGROUND

With popularization of vehicles, experience of a cockpit of a vehicle becomes increasingly important. To provide better driving experience and riding experience for a driver and a passenger, the cockpit of the vehicle may be configured with a plurality of screens, and each screen is communicatively connected to a head unit of the vehicle. In other words, the plurality of screens share one host and one system. In a traveling process of the vehicle, the driver and the passenger may use, by using screens at different positions in the cockpit of the vehicle, an application installed on the head unit.

However, when the driver and the passenger simultaneously use the plurality of screens, the same application cannot be used on the different screens simultaneously and independently. For example, when a passenger at a front passenger seat starts a video application by using a screen disposed at the front passenger seat, to watch a video, a passenger at a passenger seat cannot simultaneously start the same video application by using a screen disposed at the passenger seat. If each screen of the cockpit of the vehicle is configured with an independent host and system, resources are idle and wasted, and costs are also high.

### SUMMARY

This application provides a multi-screen running method, an electronic device, and a storage medium.

According to a first aspect, an embodiment of this application provides a multi-screen running method, applied to an electronic device. The electronic device includes at least a first screen and a second screen. The method includes:
allocating a first running environment to the electronic device and displaying the first running environment on the first screen, and allocating a second running environment to the electronic device and displaying the second running environment on the second screen, where the first running environment and the second running environment are independent of each other;
installing at least a first application on the electronic device;
when the first application is configured in the first running environment, displaying a first icon of the first application in the first running environment, where the first icon is used to start the first application in the first running environment; and
when the first application is configured in the second running environment, displaying a second icon of the first application in the second running environment, where the second icon is used to start the first application in the second running environment.

In a possible implementation of the first aspect, the electronic device is a head unit disposed in a vehicle, and the first screen and the second screen are respectively disposed at different positions in the vehicle.

In other words, in this embodiment of this application, the first screen may be a primary screen of the head unit, and the second screen may be a secondary screen of the head unit. After the first screen and the second screen are turned on, the first screen and the second screen may respectively display a desktop of the first running environment and a desktop of the second running environment. That the first running environment and the second running environment are independent of each other may indicate that the first running environment and the second running environment may be independent running environments, in an operating system of the head unit, after a plurality of users log in. The first running environment may correspond to a primary user of running and operating system of the head unit, and the second running environment may correspond to a sub-user of the running and operating system of the head unit. The first application may be a video application. That the first application is configured in the first running environment and the second running environment may indicate that the first application is installed in both the first running environment and the second running environment. The first icon and the second icon of the first application are respectively displayed on the desktop of the first running environment and the desktop of the second running environment. The first icon and the second icon may be a same icon.

According to the multi-screen running method provided in this application, after the first screen and the second screen of the head unit are turned on, the operating system of the head unit may separately render desktops of the first running environment and the second running environment that correspond to the first screen and the second screen, and simultaneously display the desktops on the first screen and the second screen. When the same first application runs in the first running environment and the second running environment, the operating system of the head unit may also separately render application interfaces of the first application displayed on the first screen and the second screen, so that the same first application on the first screen and the second screen can simultaneously display different display content.

In a possible implementation of the first aspect, the first screen is a primary screen, and the second screen is a secondary screen.

In other words, in this embodiment of this application, the first screen and the second screen may be screens that are respectively located at a driver seat and a passenger seat in the vehicle.

In a possible implementation of the first aspect, a unified operating system runs on the electronic device. A first desktop on which a first user logs in to the operating system is used in the first running environment. A second desktop on which a second user logs in to the operating system is used in the second running environment.

In other words, in this embodiment of this application, the first user herein may be a primary user of the running and operating system of the electronic device, and the second user may be a sub-user of the running and operating system of the electronic device.

In a possible implementation of the first aspect, the first user is determined based on a display identifier of the first screen, and the second user is determined based on a display identifier of the second screen.

In a possible implementation of the first aspect, a display identifier is determined based on at least one of a product number of a corresponding screen, a manufacturer number of the corresponding screen, a size of the screen, and a resolution of the screen.

In other words, in this embodiment of this application, the first user and the second user may be respectively determined based on at least one of product numbers of the first screen and the second screen, manufacturer numbers of the first screen and the second screen, sizes of the screens, and resolutions of the screens, which uniquely identify the first screen and the second screen.

In a possible implementation of the first aspect, allocating a first running environment to the electronic device and displaying the first running environment on the first screen includes:
automatically turning on the first screen in response to a first operation that a user turns on the electronic device; and
the electronic device runs the first running environment and displays the first running environment on the first screen.

In other words, in this embodiment of this application, the first operation herein may be that the user presses a power switch of the electronic device to turn on the electronic device. After the electronic device is turned on, the first screen of the electronic device is turned on, and the operating system of the electronic device runs the first running environment that corresponds to the first screen and to which the first user logs in, and displays the desktop of the first running environment on the first screen.

In a possible implementation of the first aspect, allocating a second running environment to the electronic device and displaying the second running environment on the second screen includes:
in response to a second operation that a user turns on the second screen, the electronic device runs the second running environment and displays the second running environment on the second screen.

In other words, in this embodiment of this application, the second operation herein may be an operation that the user presses a power switch of the second screen. The second screen of the electronic device is turned on, and the operating system of the electronic device runs the second running environment that corresponds to the second screen and to which the second user logs in, and displays the desktop of the second running environment on the second screen.

In a possible implementation of the first aspect, the displaying a second icon of the first application in the second running environment includes:
generating a copy of the first application for the second running environment.

In other words, in this embodiment of this application, the second running environment may alternatively be a virtual machine running in the operating system of the electronic device. An operating system that is the same as that of the electronic device runs in the second running environment, and the first application in the first running environment is replicated to the second running environment, to form the copy of the first application.

In a possible implementation of the first aspect, the method further includes:
that the first icon is used to start the first application in the first running environment includes:
responding to a third operation performed by a user on the first icon; and
starting the first application, where the first application is bound to a first process identifier based on the first user; and
that the second icon is used to start the first application in the second running environment includes:
   responding to a fourth operation performed by a user on the second icon; and
   starting the first application, where the first application is bound to a second process identifier based on the second user.

In other words, in this embodiment of this application, the third operation herein may be a tap operation performed by the user on the first icon of the first application on the first screen, and the fourth operation may be a tap operation performed by the user on the second icon on the second screen. The first process identifier may be a process identifier (pid, uid, or the like) of the first application in the first running environment. The second process identifier may be a process identifier of the first application in the second running environment. The first process identifier and the second process identifier are used by the operating system of the electronic device to distinguish between first applications.

In a possible implementation of the first aspect, when the first application is configured in the first running environment, after the displaying a first icon of the first application in the first running environment, the method further includes:
in response to a fifth operation performed by a user on the first icon, where the fifth operation indicates to install the first application in the second running environment, configuring the first application in the second running environment and displaying the second icon.

In other words, in this embodiment of this application, the fifth operation herein may be a touch and hold operation performed by the user on the first icon on the first screen and an operation of selecting the second screen. In response to the fifth operation, the operating system of the electronic device may obtain an installation package of the first application, install the first application in the second running environment, and display the second icon of the first application on the desktop of the second running environment.

In a possible implementation of the first aspect, the installing at least a first application on the electronic device includes:
in response to a sixth operation that a user downloads the first application from an application store, installing the first application on the electronic device;
in response to that the user chooses to install the first application in the first running environment, configuring the first application in the first running environment and displaying the first icon; and/or
in response to that the user chooses to install the first application in the second running environment, configuring the first application in the second running environment and displaying the second icon.

In other words, in this embodiment of this application, the sixth operation herein may be a download and installation operation performed by the user on the first application in the application store. That the user chooses to install the first application in the first running environment may be that the user selects a screen on which the first application is installed as the first screen. That the user chooses to install the first application in the second running environment may be that the user selects a screen on which the first application is installed as the second screen.

In a possible implementation of the first aspect, when the first application is configured in the first running environment, after the displaying a first icon of the first application in the first running environment, the method further includes:
in response to a seventh operation performed by a user on the first icon, where the seventh operation indicates to uninstall the first application, canceling configuration of the first application in the first running environment and/or the second running environment, deleting the first icon and/or the second icon, and deleting the first application from the electronic device.

In other words, in this embodiment of this application, the seventh operation herein may be a touch and hold operation performed by the user on the first icon on the first screen. In response to the seventh operation, the electronic device displays, on the first screen, a screen that needs to be uninstalled. After the user chooses to uninstall the first application from all screens, the electronic device uninstalls the installed first application, including: uninstalling the first application configured in the first running environment and/or the second running environment, and deleting the first icon from the desktop of the first running environment and/or the second icon from the desktop of the second running environment.

In a possible implementation of the first aspect, when the first application is configured in the first running environment, after the displaying a first icon of the first application in the first running environment, the method further includes:
in response to an eighth operation performed by a user on the first icon, where the eighth operation indicates to uninstall the first application in the first running environment and/or the second running environment, when the user chooses to uninstall the first application in the first running environment, canceling configuration of the first application in the first running environment and deleting the first icon; and when the user chooses to uninstall the first application in the second running environment, canceling configuration of the first application in the second running environment and deleting the second icon.

In other words, in this embodiment of this application, the eighth operation herein may be a touch and hold operation performed by the user on the first icon on the first screen. In response to the eighth operation, the electronic device displays, on the first screen, a screen that needs to be uninstalled. After the user selects the first screen or the second screen, the electronic device may delete the first application in the first running environment or the second running environment, and delete the first icon from the desktop of the first running environment or the second icon from the desktop of the second running environment.

In a possible implementation of the first aspect, when the first application is configured in the second running environment, after the displaying a second icon of the first application in the second running environment, the method further includes:
in response to a ninth operation performed by a user on the second icon, where the ninth operation indicates to uninstall the first application, canceling configuration of the first application in the second running environment and deleting the second icon.

In other words, in this embodiment of this application, the ninth operation herein may be a touch and hold operation performed by the user on the second icon on the second screen. In response to the ninth operation, the electronic device may delete the first application in the second running environment, and delete the second icon from the desktop of the second running environment.

According to a second aspect, an embodiment of this application provides an electronic device, including:
a memory, configured to store instructions executed by one or more processors of the electronic device; and
a processor, one of the processors of the electronic device, configured to perform the multi-screen running method in the first aspect.

According to a third aspect, an embodiment of this application provides a computer-readable storage medium. The computer-readable storage medium stores a computer program or instructions. When the computer program or the instructions are executed on an electronic device, the electronic device is enabled to perform the multi-screen running method in the first aspect.

According to a fourth aspect, an embodiment of this application provides a computer program product, including a non-volatile computer-readable storage medium. The non-volatile computer-readable storage medium includes computer program code used to perform the multi-screen running method in the first aspect.

### BRIEF DESCRIPTION OF DRAWINGS

FIG. 1 is a diagram of a cockpit of a vehicle according to an embodiment of this application;
FIG. 2a to FIG. 2c are diagrams of user interfaces on a group of screens of a head unit according to an embodiment of this application;
FIG. 3a to FIG. 3c are diagrams of user interfaces on a group of screens of a head unit according to an embodiment of this application;
FIG. 4 is a diagram of a structure of a head unit according to an embodiment of this application;
FIG. 5 is a diagram of an architecture of a software system of a head unit according to an embodiment of this application;
FIG. 6 is a schematic flowchart of a multi-screen running method according to an embodiment of this application;
FIG. 7 is a diagram of installing an application on a secondary screen of a head unit by using a primary screen of the head unit according to an embodiment of this application;
FIG. 8 is a module interaction diagram of installing an application on a secondary screen of a head unit by using a primary screen of the head unit according to an embodiment of this application;
FIG. 9 is a diagram of installing an application by using an application store on a primary screen of a head unit according to an embodiment of this application;
FIG. 10 is a module interaction diagram of installing an application by using an application store on a primary screen of a head unit according to an embodiment of this application;
FIG. 11a and FIG. 11b are diagrams of uninstalling an application by using a primary screen and a secondary screen of a head unit according to an embodiment of this application;
FIG. 12a and FIG. 12b are module interaction diagrams of uninstalling an application by using a primary screen and a secondary screen of a head unit according to an embodiment of this application;
FIG. 13 is a module interaction diagram of starting a head unit and turning on a screen of the head unit according to an embodiment of this application;
FIG. 14 is a module interaction diagram of starting an application on a screen of a head unit according to an embodiment of this application; and
FIG. 15 is a diagram of a structure of an electronic device according to an embodiment of this application.

### DESCRIPTION OF EMBODIMENTS

The following clearly and completely describes the technical solutions in embodiments of this application with reference to the accompanying drawings. In descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

The following terms "first" and "second" are merely used for description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

An "embodiment" mentioned in this application means that a particular feature, structure, or characteristic described with reference to this embodiment may be included in at least one embodiment of this application. The phrase shown in various positions in this specification may not necessarily refer to a same embodiment, and is not an independent or optional embodiment exclusive from another embodiment. It is explicitly and implicitly understood by a person skilled in the art that embodiments described in this application may be combined with another embodiment.

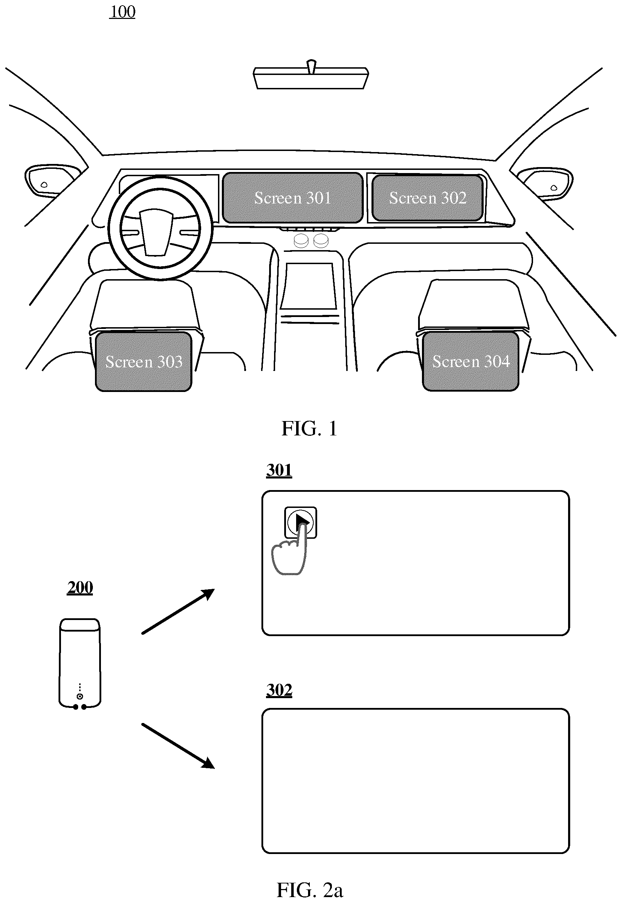

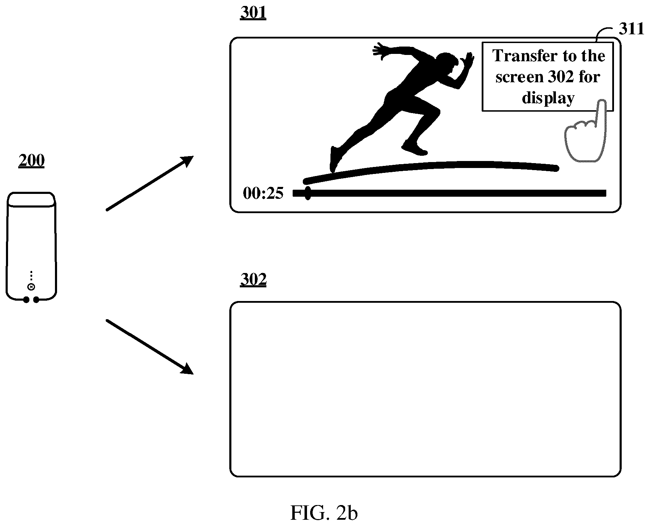

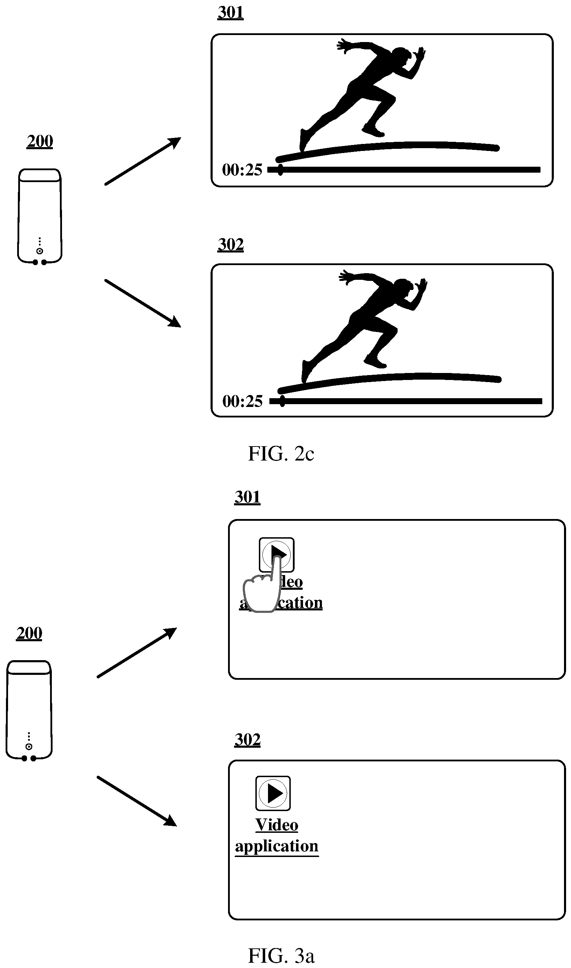

FIG. 1 is a diagram of a cockpit of a vehicle 100. As shown in FIG. 1, in the cockpit of the vehicle 100, a driver seat, a front passenger seat, and passenger seats are respectively configured with a screen 301 to a screen 304. The screen 301 to the screen 304 are separately communicatively connected to a head unit of the vehicle 100. The screen 301 may be a primary screen of the head unit, and the screen 302 to the screen 304 may be secondary screens of the head unit. An application interface of an application installed in the head unit may be displayed on the screen 301 to the screen 304 in a screen extension display manner or a projection manner. Although an application interface of a same application may be simultaneously projected and displayed on a plurality of screens or displayed on secondary screens, because the screen 301 to the screen 304 and the head unit use a same system, the same application cannot be simultaneously and independently run and displayed on the screen 301 to the screen 304. For example, as shown in FIG. 2a, an icon of a video application is displayed on the screen 301. After the head unit 200 detects a tap operation performed by a user on the icon of the video application on the screen 301, as shown in FIG. 2b, the head unit 200 displays an application interface of the video application on the screen 301. The application interface includes a control 311 transferred to the screen 302 for display. If the user taps the control 311, that is, selects the screen 302, as shown in FIG. 2c, the head unit 200 transfers the application interface of the video application to the screen 302 for display.

In some embodiments, in scenarios shown in FIG. 2a and FIG. 2c, after the user turns on the screen 302, the screen 302 may directly and synchronously display same display content as that on the screen 301, and the user does not need to perform an operation on the screen 301 to transfer the display content on the screen 301 to the screen 302 for display or project and display the display content on the screen 301 on the screen 302.

However, in the foregoing embodiment, a video, on the screen 302, seen by a passenger is the same as a video played by a vehicle owner on the screen 301, and the passenger and the vehicle owner cannot simultaneously open a same video application on respective screens to watch different video content. This greatly affects user experience.

As described above, a same application on different screens connected to the same head unit in the vehicle cannot be independently opened, and different operations cannot be performed. To resolve the foregoing problem, an embodiment of this application provides a multi-screen running method of an electronic device. In this method, the electronic device, for example, the head unit mentioned above, creates a unique display identifier for each connected screen. The screen herein may be each screen connected to the electronic device, for example, the screen 301 to the screen 304 shown in FIG. 1. Then, an independent running environment is allocated to each display identifier in an operating system of the electronic device, and an application may be independently installed and run in an independent running environment corresponding to a screen. After the electronic device detects that a screen is turned on, for example, the head unit detects that the screen 302 shown in FIG. 1 is turned on, the electronic device starts an independent running environment corresponding to the screen 302, the turned-on screen can respond to an operation of the user, and an application interface of an application installed in the independent running environment is opened and displayed. When a plurality of screens connected to the electronic device are turned on, a same application may be independently run in an independent running environment corresponding to each screen of the electronic device, and the operating system of the electronic device binds the application in different independent running environments to different process identifiers (pid, uid, or the like) for distinguishing, so that the same application on the screens can display different display content, and different operations can be performed.

It may be understood that, after the plurality of screens of the electronic device are turned on, the operating system of the electronic device may render a desktop of an independent running environment corresponding to each screen, and simultaneously display the desktops on the screens. When a same application runs in an independent running environment corresponding to each screen, the operating system of the electronic device may also render an application interface of the foregoing application displayed on each screen, so that the same application on the screens can simultaneously display different display content.

FIG. 3a to FIG. 3c are diagrams of example application interfaces of an installed application displayed by the head unit 200 disposed in the vehicle 100 on the screen 301 and the screen 302 according to an embodiment of this application. The screen 301 and the screen 302 herein may be screens that are respectively located at the driver seat and the passenger seat in the vehicle 100.

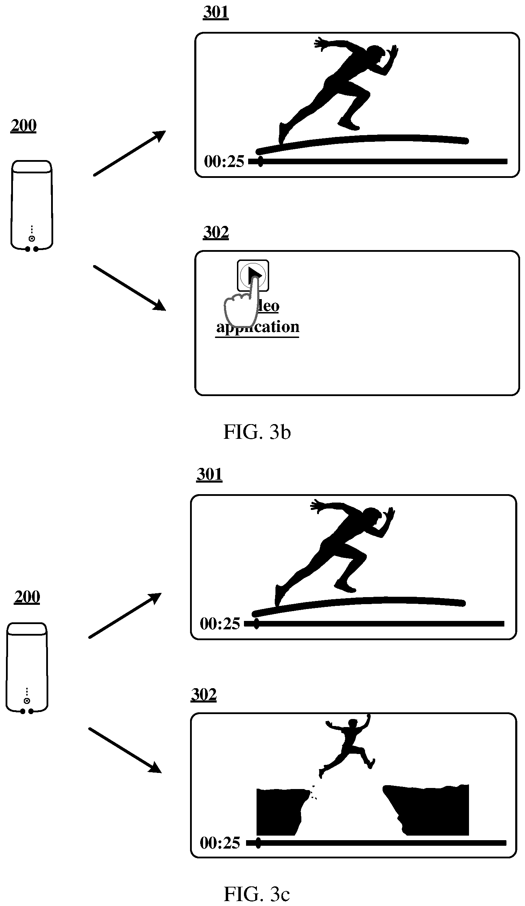

For example, as shown in FIG. 3a, the screen 301 may be a primary screen of the head unit 200, and the screen 302 may be a secondary screen of the head unit 200. The screen 301 and the screen 302 may correspond to independent running environments, and respectively display icons of corresponding applications, for example, display an icon of a same video application. Accordingly, a video application is installed in the independent running environment corresponding to the screen 301, and an icon of the video application is displayed on a desktop of the screen 301; and the video application is also installed in the independent running environment corresponding to the screen 302, and the icon of the video application is displayed on a desktop of the screen 302. As shown in FIG. 3a, when the head unit 200 receives, on the screen 301, an operation that the user opens the icon of the video application, in response to the operation, on the screen 301 in FIG. 3b, the corresponding video application is opened, and an application interface of the video application is displayed. As shown in FIG. 3b, when the head unit 200 receives, on the screen 302, an operation that the user opens the icon of the video application, in response to the operation, the head unit 200 displays the screen 301 and the screen 302 in FIG. 3c. It can be seen that on the screen 302 in FIG. 3c, the corresponding video application is opened, and an application interface of the video application is displayed. In FIG. 3c, the video application displayed on the screen 301 and the screen 302 have different application interfaces. In other words, the user opens a same video application on the screen 301 and the screen 302, but the video application on the screen 301 and the video application on the screen 302 may run independently, so that different users can watch different video content by using the screen 301 and the screen 302.

It may be understood that the independent running environment in this embodiment of this application may be implemented in a multi-user login manner or a manner of a virtual machine. In some embodiments, the independent running environments corresponding to the screens connected to the head unit may be running environments, in the operating system of the head unit, after a plurality of users log in. An independent running environment corresponding to the primary screen of the head unit may be a running environment after a primary user of the running and operating system of the head unit logs in, and an independent running environment corresponding to the secondary screen of the head unit (a screen, other than the primary screen of the head unit, connected to the head unit) may be a running environment after a sub-user of the running and operating system of the head unit logs in. A same application installed in different running environments may be implemented by using installation flags. Whether to display an icon of a corresponding application in a corresponding running environment is determined based on installation flags of different running environments.

In some embodiments, an independent running environment corresponding to a screen of the head unit may alternatively be a virtual machine running in the operating system of the head unit. An operating system that is the same as that of the head unit may be installed on the virtual machine. An application in the operating system of the head unit may be installed on the operating system of the virtual machine corresponding to the screen of the head unit, that is, a copy of the application is created in the virtual machine, so that a same application can run independently on the screens of the head unit, and different application interfaces are displayed.

To describe the multi-screen running method provided in embodiments of this application more clearly and in detail, the following first describes an electronic device 200 that is used to implement the method and that is provided in embodiments of this application. The electronic device 200 may be a head unit, or may be an electronic device that supports a plurality of screens, for example, a mobile phone, a tablet computer, or a personal digital assistant (personal digital assistant, PDA). A specific type of the electronic device is not limited in embodiments of this application.

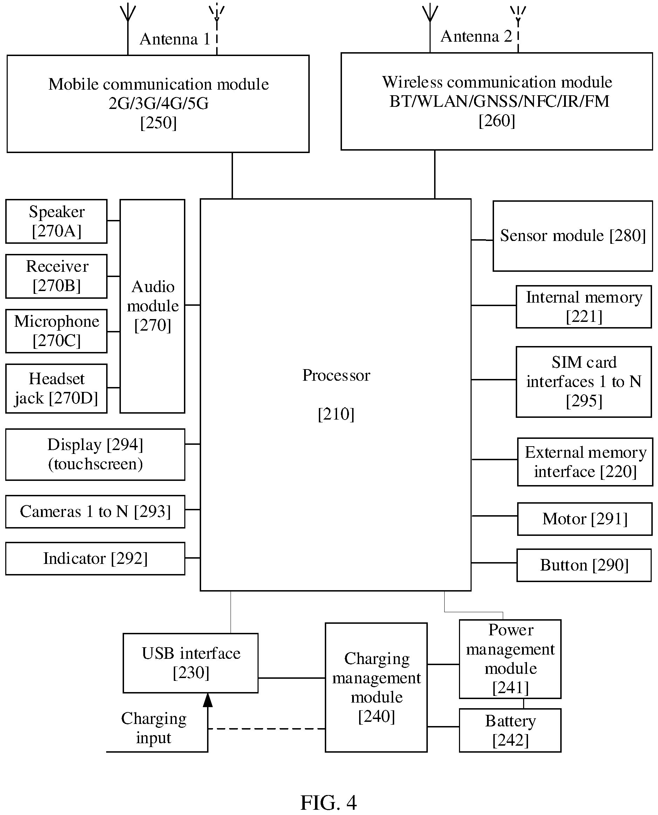

As shown in FIG. 4, the electronic device 200 may include a processor 210, an external memory interface 220, an internal memory 221, a universal serial bus (universal serial bus, USB) interface 230, a charging management module 240, a power management module 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identity module (subscriber identity module, SIM) card interface 295, and the like.

The sensor module 280 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, and the like.

It may be understood that the structure shown in this embodiment does not constitute any specific limitation on the electronic device. In some other embodiments, the electronic device may include more or fewer components than those shown in the figure, or some components may be combined, or some components may be split, or different component arrangements may be used. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 210, and is configured to store instructions and data. In some embodiments, the memory in the processor 210 is a cache. The memory may store instructions or data that has been used or cyclically used by the processor 210. If the processor 210 needs to use the instructions or the data again, the processor may directly invoke the instructions or the data from the memory. This avoids repeated access and reduces a waiting time of the processor 210, and therefore improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment is merely used as an example for description, and does not constitute any limitation on the structure of the electronic device. In some other embodiments, the electronic device may alternatively use an interface connection manner different from that in the foregoing embodiment, or use a combination of a plurality of interface connection manners.

The electronic device implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

The display 294 is configured to display an image, a video, or the like. The display 294 includes a display panel.

The electronic device may implement a photographing function by using the ISP, the camera 293, the video codec, the GPU, the display 294, the application processor, or the like. The ISP is configured to process data fed back by the camera 293. The camera 293 is configured to capture a static image or a video. In some embodiments, the electronic device may include one or N cameras 293, where N is a positive integer greater than 1.

The external memory interface 220 may be configured to connect to an external storage card, for example, a micro SD card, to expand a storage capability of the electronic device. The external storage card communicates with the processor 110 through the external memory interface 120, to implement a data storage function. For example, files such as music and videos are stored in the external storage card.

The internal memory 221 may be configured to store computer-executable program code. The executable program code includes instructions. The processor 210 runs the instructions stored in the internal memory 221, to perform various function applications and data processing of the electronic device. For example, in this embodiment of this application, the processor 210 may execute the instructions stored in the internal memory 221, and the internal memory 221 may include a program storage area and a data storage area.

The program storage area may store an operating system, an application required for at least one function (for example, a sound playing function or an image playing function), and the like. The data storage area may store data (for example, audio data or a phone book) and the like created when the electronic device is used. In addition, the internal memory 221 may include a high-speed random access memory, or may include a non-volatile memory, for example, at least one magnetic disk storage device, a flash memory, or a universal flash storage (universal flash storage, UFS).

It may be understood that the structure shown in this embodiment of this application does not constitute any specific limitation on the electronic device. In some other embodiments of this application, the electronic device may include more or fewer components than those shown in the figure, or some components may be combined, or some components may be split, or different component arrangements may be used. The components shown in the figure may be implemented by hardware, software, or a combination of software and hardware.

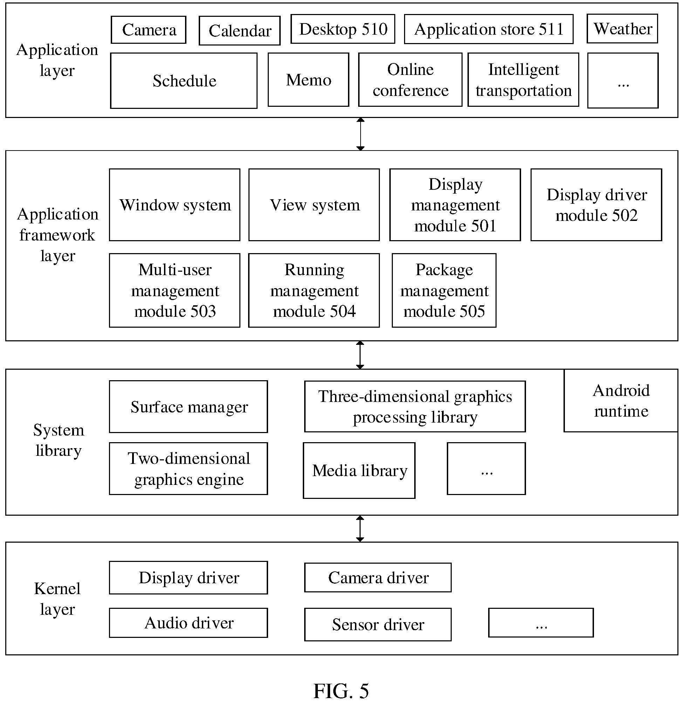

FIG. 5 is a block diagram of a software structure of a system of the head unit 200 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 5, the application layer may include applications such as a desktop 510, an application store 511, a camera, and a calendar.

The application framework layer may include a window system, a view system, a display management module 501, a display driver module 502, a multi-user management module 503, a running management module 504, and a package management module 505. The window system may be configured to manage a turned-on window of the head unit 200. A layout system and the view system may be configured to manage a running mode of a user interface in the window. The display management module 501 is configured to scan screen information of each screen connected to the electronic device. The display driver module 502 is configured to manage a hardware driver of each screen connected to the electronic device. The multi-user management module 503 is configured to create a uniquely determined user identifier (a user ID running in the background) for each screen, and create an independent running environment in which an application on each screen corresponding to a user identifier runs. The running management module 504 is configured to start an independent running environment of a user identifier corresponding to a turned-on screen. The package management module 505 is configured to manage application installation and component information after installation, and add a corresponding icon to a desktop of a corresponding screen.

In some embodiments, the display management module 501, the display driver module 502, the multi-user management module 503, the running management module 504, and the package management module 505 may be configured as system services corresponding to the operating system of the head unit 200. The system of the head unit 200 and an independent running environment in the system may share the display management module 501, the display driver module 502, the multi-user management module 503, the running management module 504, and the package management module 505. In other words, the display management module 501, the display driver module 502, the multi-user management module 503, the running management module 504, and the package management module 505 may control the system of the head unit 200 and startup, installation, uninstallation, and use of an application in the independent running environment in the system. The desktop 510 may be a desktop application in the independent running environment corresponding to the primary screen of the head unit 200.

In some embodiments of this application, a user may set up an application, and in response to setting of the user, the electronic device generates an event by using an application package.

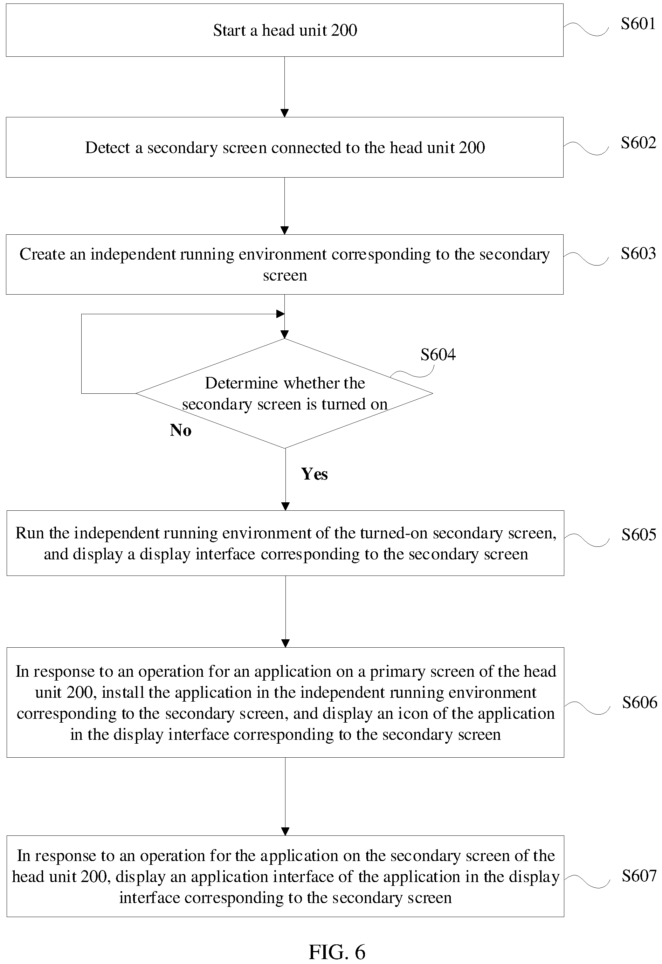

The following describes in detail, based on a schematic flowchart of a method shown in FIG. 6, the multi-screen running method provided in embodiments of this application. The method shown in FIG. 6 may be implemented by a processor of an electronic device 200 by executing a related instruction. The electronic device 200 herein may be a head unit. The multi-screen running method includes the following steps.

S601: Start a head unit 200.

For example, a user may press a power switch of the head unit 200 to start the head unit 200. In some embodiments, the head unit 200 may alternatively be automatically started in response to an operation that the user starts a vehicle.

S602: Detect a secondary screen connected to the head unit 200.

For example, after the head unit 200 is started, a primary screen of the head unit 200 is simultaneously turned on, and the head unit 200 may further detect the secondary screen connected to the head unit 200. The secondary screen herein may be connected to the head unit 200 through a wired network of the vehicle, for example, through a network cable disposed inside the vehicle, or may be connected to the head unit through a wireless network, for example, through Wi-Fi or Bluetooth. The secondary screen herein may be a screen (display), other than the primary screen of the head unit 200, connected to the head unit 200.

S603: Create an independent running environment corresponding to the secondary screen.

For example, for each secondary screen connected to the head unit 200, the head unit may obtain screen information of the secondary screen. For example, the screen information herein may include a product number of a screen, a manufacturer number of the screen, a size of the screen, a resolution of the screen, and the like. The head unit may determine, based on the screen information of the secondary screen, a display identifier (display ID) that uniquely identifies the secondary screen. The head unit may create a user identifier corresponding to the screen information (the display identifier) of the secondary screen. The user identifier herein may be a bound and uniquely determined user identifier that runs in the background. In some embodiments, when an operating system of the head unit supports multi-user login, the user identifier herein may be a sub-user of the operating system of the head unit. In other words, a user identifier corresponding to the primary screen of the head unit may be a primary user of the operating system of the head unit.

The screen 301 to the screen 304 in FIG. 1 are used as an example. The operating system of the head unit obtains screen information of the screen 301 to the screen 304. For example, the screen information corresponding to the screen 301 may be a product number, for example, 0301, plus a manufacturer number, for example, 0301, plus a size, for example, 16. Therefore, a determined display identifier of the screen 301 may be, for example, 0301030116. A user identifier that is of the screen 301 and that is created by the operating system of the head unit may be user0301030116. For example, a user identifier of the screen 302 may be user0302030114. After user identifiers of the screen 301 to the screen 304 are created, the operating system of the head unit may use the user identifiers of the screen 301 to the screen 304 as sub-users of the operating system of the head unit, and user space corresponding to the user identifiers of the screen 301 to the screen 304 is established in the operating system of the head unit as independent running environments corresponding to the screen 301 to the screen 304. It can be seen that the independent running environments of the screen 301 to the screen 304 may be distinguished based on the respective user identifiers of the screen 301 to the screen 304.

In the operating system of the head unit, a same application may be independently installed in the independent running environments corresponding to the screen 301 to the screen 304, and the application may independently run in the independent running environments corresponding to the screen 301 to the screen 304.

In some embodiments, an independent running environment corresponding to the primary screen of the head unit may be a running environment, in the operating system running after the head unit is powered on, to which the primary user logs in, and the independent running environment corresponding to the secondary screen of the head unit may be a running environment, in the operating system of the head unit, to which the sub-user logs in.

In some embodiments, the independent running environment to which the primary user logs in and the independent running environment to which the sub-user logs in may share an installation resource of a same application, so that the same application is installed (including loaded) in different independent running environments, to implement independent running.

In some embodiments, the independent running environment corresponding to the secondary screen of the head unit may alternatively be a virtual machine running in the operating system of the head unit. An operating system that is the same as that of the head unit may be installed on the virtual machine, so that an application in the operating system of the head unit can be installed on the virtual machine, namely, the independent running environment, corresponding to the secondary screen of the head unit.

S604: Determine whether the secondary screen is turned on.

For example, the user may press a power switch of the secondary screen to turn on the secondary screen. After the head unit detects that the secondary screen is turned on, step S605 is performed, that is, the head unit may run the independent running environment of the turned-on secondary screen, and display a desktop of the secondary screen on the secondary screen. After the head unit detects that the secondary screen is not turned on, return to step S604 until the head unit detects that the secondary screen connected to the head unit is turned on.

S605: Run the independent running environment of the turned-on secondary screen, and display a display interface corresponding to the secondary screen.

For example, the display interface herein may be the desktop of the secondary screen. The head unit may start independent running environments of secondary screens one by one based on the secondary screen that is connected to the head unit and that is turned on. The head unit may find the user identifier of the secondary screen based on the screen information of the secondary screen, and run the independent running environment corresponding to the user identifier. In some embodiments, when the user identifier of the secondary screen is the sub-user of the operating system of the head unit, the sub-user logs in to the operating system of the head unit, so that the head unit can run the independent running environment of the secondary screen, and a desktop of the independent running environment corresponding to the secondary screen can be displayed on the turned-on secondary screen.

S606: In response to an operation of creating a secondary-screen application for an application on the primary screen and selecting the specified secondary screen, install the application in the independent running environment corresponding to the secondary screen, and display an icon of the application in the display interface corresponding to the secondary screen.

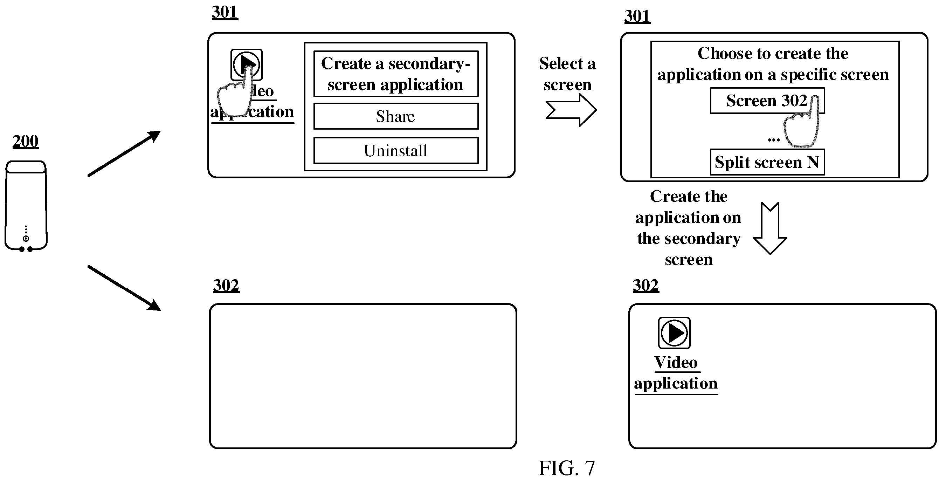

For example, as shown in FIG. 7, the screen 301 may be a primary screen of the head unit 200, and the screen 302 may be a secondary screen of the head unit 200. The screen 301 in FIG. 7 may display an icon of a video application. When the head unit 200 receives, on the screen 301 shown in FIG. 7, an operation that the user sets the icon of the video application, for example, an operation that the user touches and holds the displayed icon of the video application on the screen 301, the screen 301 displays operation options in response to the operation. The operation options may include: creating a secondary-screen application, sharing, and uninstalling. Creating a secondary-screen application means installing the video application on the secondary screen connected to the head unit 200. Sharing means sharing information about the video application with some social software. Uninstalling means deleting the video application from the operating system of the head unit 200. When the head unit 200 receives, on the screen 301 shown in FIG. 7, an operation performed by the user on an option of creating a secondary-screen application in the operation options, the head unit 200 displays an operation option list of screen selection on the screen 301 in FIG. 7 in response to the operation, and the user may perform a selection operation on the screen 302 in the operation selection and execution list. For example, the operation selection and execution list herein may display, on the screen 301, options of screens that are connected to the head unit 200 and that are turned on and that include the screen 302 to the secondary screen N. The selection operation performed on the screen 302 may be a tap operation performed on an option of the screen 302. In response to the operation, the head unit 200 may display the icon of the video application on the screen 302 in FIG. 7. In some embodiments, the user may perform a tap operation on one or more options of a screen in the operation selection and execution list.

S607: In response to an operation of opening the application on the corresponding secondary screen, display an application interface of the application in the display interface corresponding to the secondary screen.

For example, after the head unit 200 installs the video application in the independent running environment corresponding to the screen 302, the user may open the video application on the screen 301 and the video application on the screen 302, and the video application on the screen 301 and the video application on the screen 302 may run independently, so that different users can watch different video content by using the screen 301 and the screen 302.

It can be learned that, in step S606 shown in FIG. 6, the head unit 200 may install the application in the independent running environment corresponding to the secondary screen, and the user may independently run the application in the independent running environment of the secondary screen, so that the user can simultaneously open a same application on the secondary screen and the primary screen, and independently use a corresponding application.

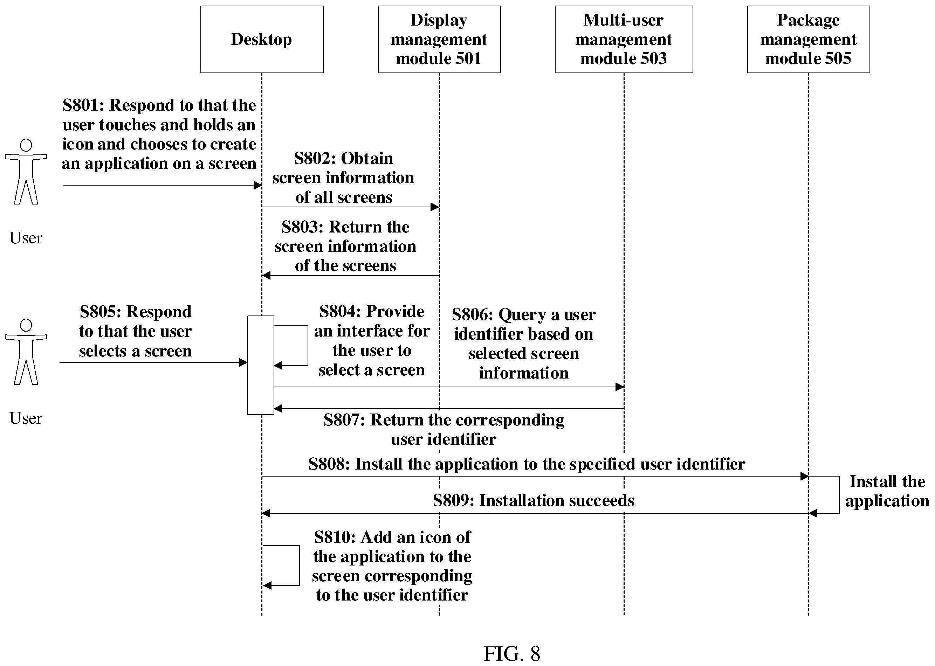

For example, FIG. 8 is a module interaction diagram of installing the application in the independent running environment, corresponding to the secondary screen, by the head unit 200 described in step S606 in FIG. 6. In the module interaction diagram shown in FIG. 8, the following steps may be performed by the desktop 510 (the desktop application) corresponding to the primary screen of the head unit 200, and the display management module 501, the multi-user management module 503, and the package management module 505 at the application framework layer of the head unit 200 shown in FIG. 5.

S801: The desktop 510 receives an operation performed by a user on an icon of an application on the primary screen.

For example, the desktop 510 herein may be a desktop application in an independent running environment corresponding to the primary screen of the head unit 200. The operation performed by the user on the icon of the application on the primary screen of the head unit 200 may be an operation that the user touches and holds the icon of the application on the primary screen. Through the operation, the user may subsequently choose to create the application on one screen connected to the head unit 200, that is, install the application in an independent running environment corresponding to the selected screen.

In some embodiments, in addition to the primary screen of the head unit 200, the user may also select a desktop of any screen that is connected to the head unit 200 and that is turned on, to perform the operation on an icon of an application on the desktop.

S802: The display management module 501 obtains screen information of all screens connected to the head unit 200.

For example, the display management module 501 may obtain the screen information of all screens. The screen information herein may include a product number of a screen, a manufacturer number of the screen, a size of the screen, a resolution of the screen, and the like.

S803: The display management module 501 returns the obtained screen information of all screens to the desktop 510 of the head unit 200.

For example, after obtaining the screen information of all screens connected to the head unit 200, the display management module 501 returns the screen information to the desktop 510 of the primary screen of the head unit 200 for display.

S804: The desktop 510 provides, on the primary screen, an interface for the user to select a screen.

For example, the desktop 510 may display, on the primary screen, all screens connected to the head unit 200, so that the user selects a screen on which the application is to be installed. The desktop 510 may display a corresponding screen based on a display identifier corresponding to the screen. For example, display identifiers corresponding to the screens may include a screen at a front passenger seat, a screen 1 at a passenger seat, a screen 2 at a passenger seat, and the like.

S805: The desktop 510 obtains an operation performed by the user on a screen displayed in the interface of the primary screen.

For example, the desktop 510 may obtain tap operations performed by the user on all screens displayed in the interface, and send screen information determined through the tap operation to the multi-user management module 503.

S806: The multi-user management module 503 queries a user identifier based on screen information selected by the user.

For example, the desktop 510 may send the screen information selected by the user to the multi-user management module 503, and the multi-user management module 503 queries the user identifier based on a correspondence between screen information and a user identifier. The user identifier herein may be a user ID of the selected screen, and the user ID herein uniquely identifies the corresponding screen.

S807: The multi-user management module 503 returns the obtained user identifier to the desktop 510.

For example, the multi-user management module 503 may return the obtained user identifier to the desktop 510 in the independent running environment of the primary screen of the head unit 200.

S808: The package management module 505 installs the application in an independent running environment corresponding to the user identifier of the specified screen.

For example, the package management module 505 may install the application in the independent running environment corresponding to the screen. For example, the independent running environment herein may be a second running environment, in an operating system of the head unit 200, to which a corresponding second user logs in as a sub-user. That a first application is installed in the second running environment means that the first application is configured in the running environment to which the second user logs in. Specifically, an installation flag is maintained for whether the first application is configured in the second running environment. If the installation flag is true, it indicates that the first application is installed in the second running environment, and an icon corresponding to the first application is displayed and started in the second running environment; or if the installation flag is false, it indicates that the first application is not installed in the second running environment, and the first application cannot be started in the second running environment.

S809: After installing the application in the independent running environment corresponding to the user identifier, the package management module 505 returns successful installation to the desktop 510.

For example, after installing the application in the independent running environment corresponding to the user identifier of the screen selected by the user, the package management module 505 may return, to the desktop 510 corresponding to the primary screen of the head unit 200, prompt information indicating that installation succeeds.

S810: Add an icon of the installed application to a desktop corresponding to the screen selected by the user.

For example, after the application is successfully installed, the icon of the application may be added to the desktop corresponding to the screen selected by the user, and accordingly, the icon of the installed application is displayed on the desktop corresponding to the screen selected by the user.

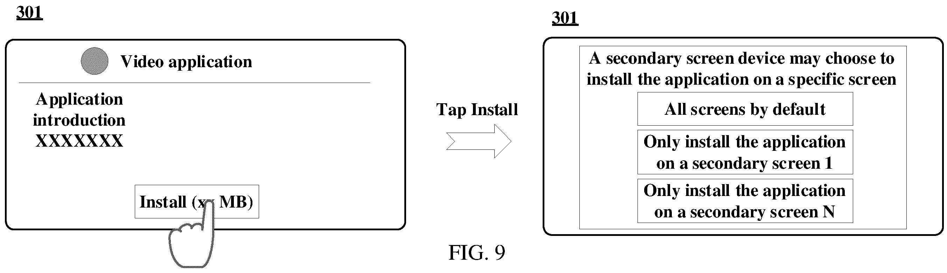

FIG. 9 is a diagram of a scenario in which when a user downloads and installs an application by using the primary screen of the head unit 200, the application is installed on a secondary screen connected to the head unit 200. In FIG. 9, the head unit 200 may detect whether the head unit 200 is connected to a plurality of secondary screens, that is, the operating system of the head unit 200 automatically detects whether the head unit 200 is a multi-screen device. If yes, an interface for selecting a secondary screen for installation pops up on the primary screen (the screen 301) of the head unit 200. The user may select a secondary screen for installation and perform installing on the secondary screen, to install an application in an independent running environment specified by the user.

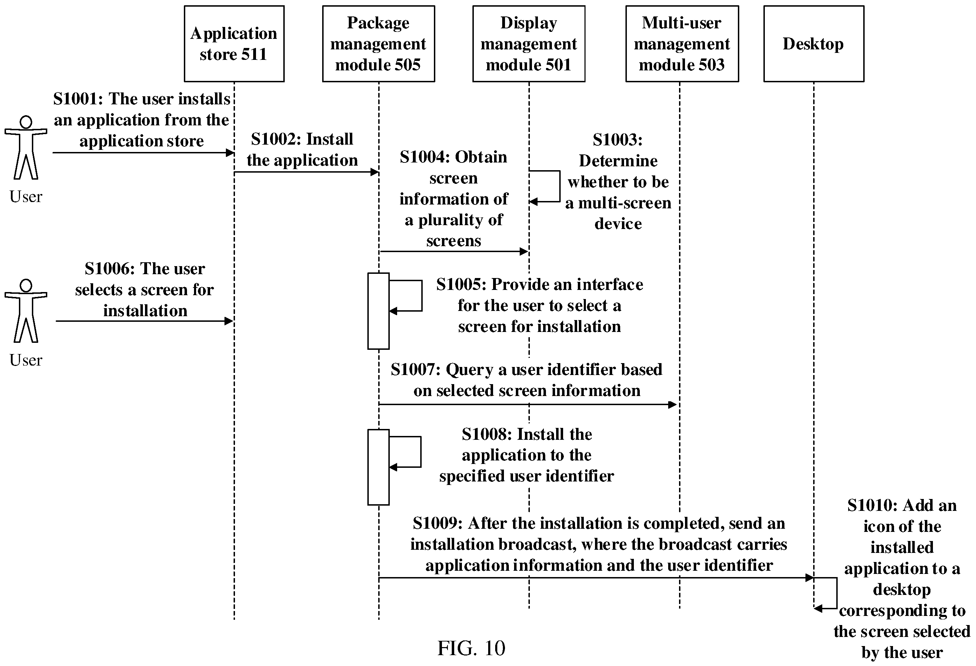

For example, FIG. 10 is a module interaction diagram of downloading, from an application store, an application by the head unit 200 and installing the application in an independent running environment corresponding to a secondary screen described in FIG. 9. In the module interaction diagram shown in FIG. 10, the following steps may be performed by the application store 511 corresponding to the primary screen of the head unit 200 shown in FIG. 5, and the display management module 501, the multi-user management module 503, and the package management module 505 at the application framework layer of the head unit 200, and a desktop corresponding to the secondary screen.

S1001: The application store 511 obtains a download and installation operation performed by a user on an application, and downloads an installation package of the application.

For example, the download and installation operation performed by the user on an application in the application store 511 corresponding to the primary screen of the head unit 200 may be that the user opens the application store 511 on the primary screen, and selects and taps an application in an application list displayed in the application store 511, to download and install the application.

S1002: The package management module 505 obtains the installation package of the application downloaded from the application store 511, and prepares to install the application.

For example, after the installation package of the application is downloaded from the application store 511, the package management module 505 prepares to install the application by using the installation package of the application.

S1003: The display management module 501 determines whether the head unit 200 is a multi-screen device.

For example, when the head unit 200 includes a primary screen and is connected to at least one secondary screen, the display management module 501 determines that the head unit 200 is the multi-screen device.

S1004: The display management module 501 obtains screen information of all screens connected to the head unit 200.

For example, the display management module 501 may obtain the screen information of all screens. The screen information herein may include a product number of a screen, a manufacturer number of the screen, a size of the screen, a resolution of the screen, and the like.

S1005: The package management module 505 may provide, by using the application store 511, an interface for the user to select a screen for installation.

For example, the package management module 505 may display, in an application interface of the application store 511, all screens connected to the head unit 200, so that the user selects a screen on which the application is to be installed.

S1006: The package management module 505 obtains a screen for installation selected by the user.

For example, the application store 511 may obtain tap operations performed by the user on all screens displayed in the application interface, and send screen information determined through the tap operation to the package management module 505, and then the package management module 505 sends the screen information to the multi-user management module 503.

S1007: The multi-user management module 503 queries a user identifier based on the screen information selected by the user.

For example, the multi-user management module 503 queries the user identifier based on a correspondence between screen information and a user identifier. The user identifier herein may be a user ID corresponding to the selected screen, and the user ID herein uniquely identifies the screen.

S1008: The package management module 505 installs the application in an independent running environment corresponding to the specified user identifier.

For example, the package management module 505 may install the application in the independent running environment corresponding to the user identifier. For example, the independent running environment herein may be a running environment, in an operating system of the head unit 200, to which a corresponding user identifier logs in as a sub-user.

S1009: After installing the application, the package management module 505 sends an installation broadcast.

For example, after installing the application, the package management module 505 may send the installation broadcast to a desktop corresponding to the selected screen for installation. The installation broadcast herein may carry application information corresponding to the installed application and the user identifier.

S1010: Add an icon of the installed application to the desktop corresponding to the screen selected by the user.

For example, after the application is installed, the icon of the application may be added to the desktop corresponding to the screen selected by the user, and accordingly, the icon of the installed application is displayed on the desktop corresponding to the screen selected by the user.

To facilitate application management, the application store is usually configured only in an independent running environment corresponding to the primary screen of the head unit 200, and an application is installed, by using the application store, in an independent running environment corresponding to the secondary screen of the head unit 200. It may be understood that, in some embodiments, the application store may alternatively be installed in the independent running environment corresponding to the secondary screen of the head unit 200. The user may download an application from the application store on the secondary screen of the head unit 200, and the application is directly installed in the independent running environment corresponding to the secondary screen. A process of downloading an application from the application store on the secondary screen of the head unit 200, and installing the application in the independent running environment corresponding to the secondary screen may include: The user performs a download and installation operation on the application in the application store on the secondary screen, and downloads an installation package of the application; a user identifier of the secondary screen is determined based on screen information of the secondary screen, and the application is installed in the independent running environment corresponding to the specified user identifier; and an icon of the installed application is added to a desktop corresponding to the secondary screen.

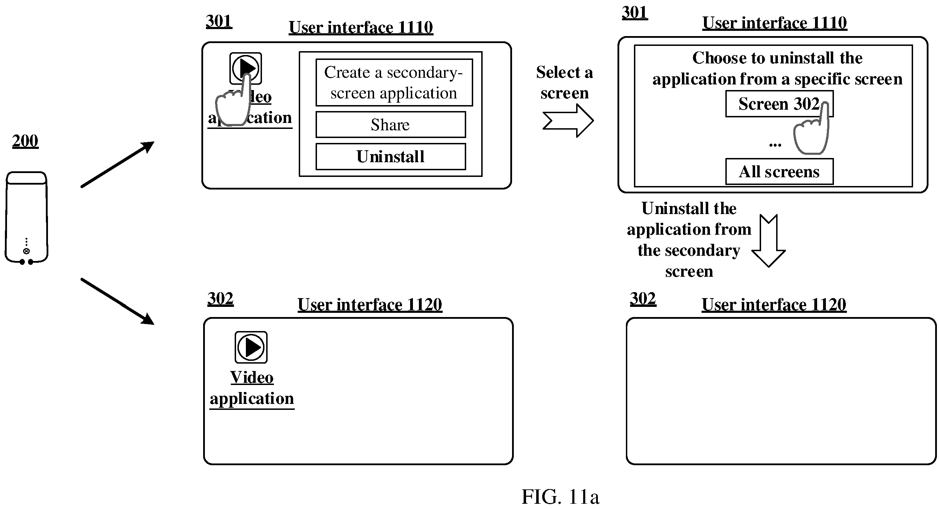

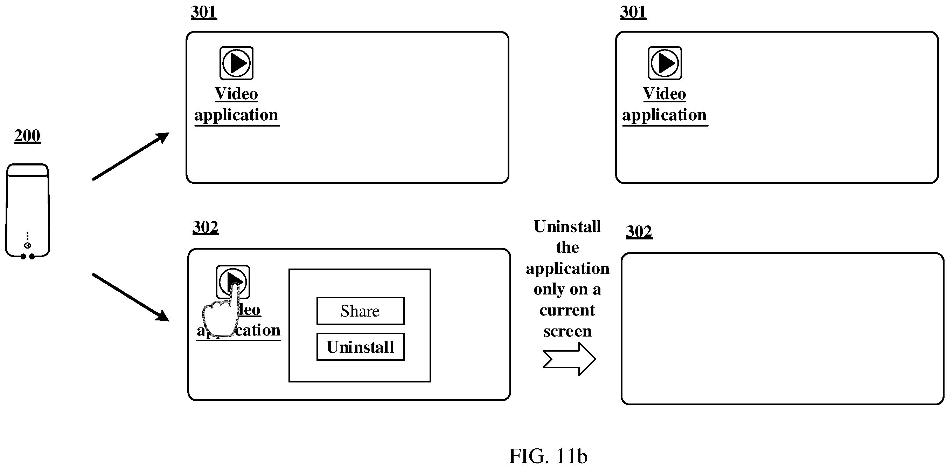

FIG. 11a and FIG. 11b are diagrams of a scenario in which an installed application is deleted from the primary screen and the secondary screen of the head unit 200. As shown in FIG. 11a, the screen 301 may be a primary screen of the head unit 200, and the screen 302 may be a secondary screen of the head unit 200. The screen 301 and the screen 302 may separately display an icon of a video application. When the head unit 200 receives an operation performed by the user on the icon of the video application on the screen 301 (for example, a touch and hold operation performed by the user on the icon of the video application on the screen 301), the head unit 200 displays operation options on the screen 301 in response to the operation. The operation options may include: creating a secondary-screen application, sharing, and uninstalling. When the head unit 200 receives, on the screen 301, an operation performed by the user on an option of uninstalling in the operation options, the head unit 200 displays operation options of screen selection on the screen 301 in response to the operation. The user may perform an operation on the screen 302 in the operation options of screen selection. In response to the operation, the icon of the video application on the screen 302 of the head unit 200 is removed, that is, the head unit 200 deletes the video application in the independent running environment corresponding to the screen 302. Accordingly, a corresponding installation flag may be set from true to false. In some embodiments, the user may alternatively choose to uninstall the application from all screens, that is, completely delete the corresponding application from the head unit 200. An installation file of the application is deleted, and the icon of the application displayed on each screen is also deleted.

In some embodiments, the head unit 200 may alternatively delete, in response to the operation performed by the user on the application on the secondary screen, the application in the independent running environment corresponding to the secondary screen. As shown in FIG. 11b, the screen 301 may be a primary screen of the head unit 200, and the screen 302 may be a secondary screen of the head unit 200. The screen 302 may display the icon of the video application. When the head unit 200 receives an operation performed by the user on the icon of the video application on the screen 302 (for example, a touch and hold operation performed by the user on the displayed icon of the video application on the screen 302), the head unit 200 displays operation options on the screen 302 in response to the operation. The operation options may include: sharing and uninstalling. When the head unit 200 receives, on the screen 302, an operation performed by the user on an option of uninstalling in the operation options, in response to the operation, the icon of the video application on the screen 302 of the head unit 200 is removed, that is, the head unit 200 deletes the video application in the independent running environment corresponding to the screen 302. It can be learned that the icon of the video application on the screen 301 of the head unit 200 is reserved.

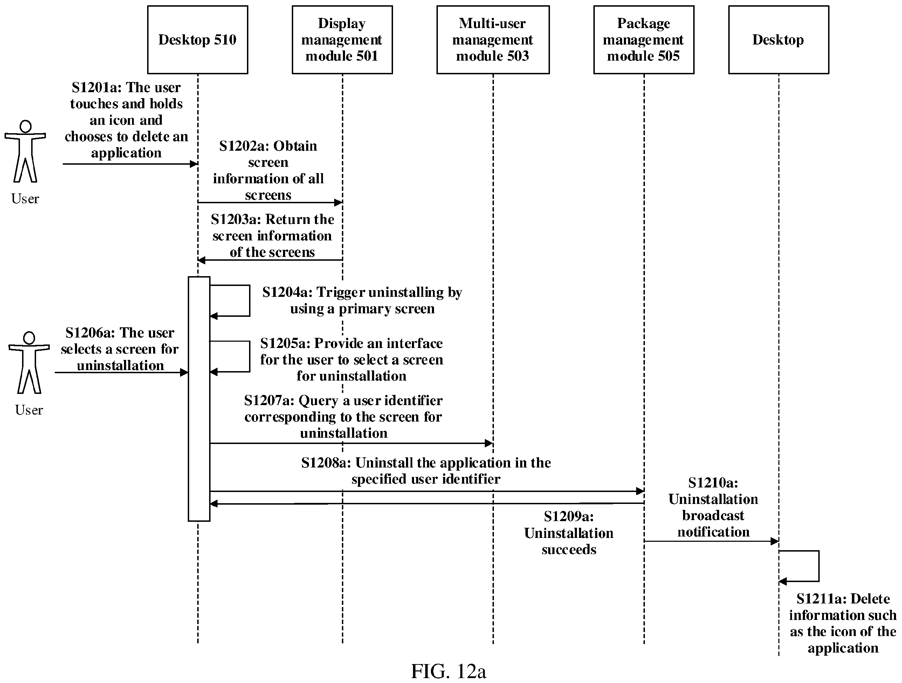

For example, FIG. 12a is a module interaction diagram of deleting an application by the head unit 200 described in FIG. 11a and FIG. 11b. The module interaction diagram shown in FIG. 12a describes a process in which a user triggers application uninstallation by using the primary screen of the head unit 200. In the module interaction diagram shown in FIG. 12a, the following steps are performed by the desktop 510 corresponding to the primary screen of the head unit 200 shown in FIG. 5, and the display management module 501, the multi-user management module 503, the package management module 505 at the application framework layer of the head unit 200, and a desktop corresponding to a secondary screen.

S1201a: The desktop 510 receives an operation that a user touches and holds an icon of an application on a screen of the head unit 200.

For example, the user may perform a touch and hold operation on the icon of the application on the desktop 510 of the primary screen of the head unit 200.

S1202a: The display management module 501 obtains screen information of all screens connected to the head unit 200.

For example, the display management module 501 may obtain the screen information of all screens. The screen information herein may include a product number of a screen, a manufacturer number of the screen, a size of the screen, a resolution of the screen, and the like.

S1203a: The display management module 501 returns the obtained screen information of all screens to the desktop 510.

For example, after obtaining the screen information of all screens connected to the head unit 200, the display management module 501 returns the screen information to a screen operated by the user for display.

S1204a: Trigger uninstalling by using the primary screen.

For example, if it is determined that the user performs the operation of touching and holding the icon of the application on the primary screen of the head unit 200, step S1205a is performed, that is, the desktop 510 provides an interface for the user to select a screen for uninstallation.

S1205a: The desktop 510 provides, on the primary screen, an interface for the user to select a screen.

For example, the desktop 510 may display, on the primary screen, all screens connected to the head unit 200, so that the user selects a screen on which the application is to be uninstalled.

S1206a: The desktop 510 obtains a screen for uninstallation selected by the user.

For example, the desktop 510 may obtain a tap operation performed by the user on the screen displayed on the primary screen, and send screen information determined through the tap operation to the multi-user management module 503. For example, the user may select the screen 302 of the head unit 200 shown in FIG. 11a, that is, the user chooses to delete a specified application in an independent running environment corresponding to one secondary screen of the head unit 200.

S1207a: The multi-user management module 503 queries a user identifier corresponding to the screen for uninstallation.

For example, the user identifier herein may be a user ID of the selected screen, and the user ID herein uniquely identifies the screen.

S1208a: The package management module 505 deletes the application in an independent running environment corresponding to the specified user identifier.

For example, if the secondary screen selected by the user is the screen 302 of the head unit 200 shown in FIG. 11a, the package management module 505 may delete the specified application in an independent running environment corresponding to the screen 302. The corresponding independent running environment may be an operating system to which a user identifier corresponding to the screen 302 logs in. Accordingly, a corresponding installation flag is updated.

S1209a: After uninstalling the application in the independent running environment corresponding to the specified user identifier, the package management module 505 returns successful uninstallation to the desktop 510.

For example, after uninstalling the application in the independent running environment corresponding to the screen selected by the user, the package management module 505 may return, to the desktop 510 corresponding to the primary screen of the head unit 200, prompt information indicating that uninstallation succeeds.

S1210a: After uninstalling the application, the package management module 505 sends an uninstallation broadcast notification.

For example, after uninstalling the application, the package management module 505 may send an uninstallation broadcast to a desktop corresponding to the selected screen for uninstallation. The uninstallation broadcast herein may carry application information corresponding to the uninstalled application and the user identifier.

S1211a: Delete the icon of the uninstalled application from the desktop corresponding to the screen for uninstallation selected by the user.

For example, after the application is uninstalled, the icon of the application may be deleted from the desktop in the independent running environment of the screen for uninstallation selected by the user, that is, the icon of the uninstalled application is deleted from the desktop corresponding to the screen selected by the user.

In addition to the foregoing description in step S1206a in which the user may choose to delete a specified application in an independent running environment corresponding to one secondary screen of the head unit, in some embodiments, the user may alternatively choose to delete a specified application from a plurality of screens of the head unit or from independent running environments corresponding to all screens of the head unit. For example, the user may tap all screens in the operation options of screen selection shown in FIG. 11a. In response to the foregoing operation, the head unit 200 deletes applications in independent running environments corresponding to the primary screen and the secondary screen, and deletes an icon of the application from the desktop.

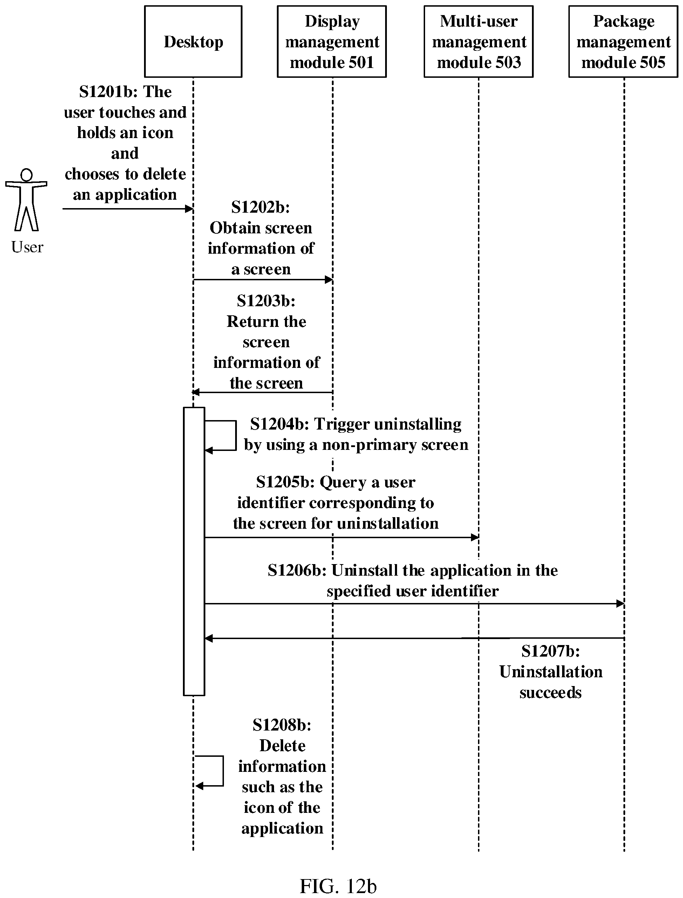

In some embodiments, the module interaction diagram shown in FIG. 12b describes a process in which a user triggers application uninstallation by using a secondary screen of the head unit 200. In the module interaction diagram shown in FIG. 12b, the following steps are performed by a desktop corresponding to a secondary screen of the head unit 200 shown in FIG. 5, and the display management module 501, the multi-user management module 503, and the package management module 505 at the application framework layer of the head unit 200.

S1201b: The desktop receives an operation that a user touches and holds an icon of an application on a screen of the head unit 200.

For example, the user may perform a touch and hold operation on the icon of the application on the desktop of the secondary screen of the head unit 200.

S1202b: The display management module 501 obtains screen information of the screen.

For example, the display management module 501 may obtain screen information of the secondary screen. The screen information herein may include a product number of a screen, a manufacturer number of the screen, a size of the screen, a resolution of the screen, and the like.

S1203b: The display management module 501 returns the obtained screen information to the desktop.

For example, after obtaining the screen information of the secondary screen, the display management module 501 returns the screen information to the screen operated by the user for display.

S 1204b: Trigger uninstalling by using a non-primary screen.

For example, if the desktop determines that the user performs the operation of touching and holding the icon of the application on the secondary screen of the head unit 200, step S1205a is performed.

S1205b: The multi-user management module 503 queries a user identifier corresponding to the screen for uninstallation.

For example, the user identifier herein may be a user ID of the secondary screen operated by the user, and the user ID herein uniquely identifies the secondary screen.

S1206b: The package management module 505 deletes the application in an independent running environment corresponding to the specified user identifier.

For example, the package management module 505 may delete a specified application in an independent running environment corresponding to the screen 302. The corresponding independent running environment may be an operating system to which a user identifier corresponding to the screen 302 logs in.

S1207b: After uninstalling the application in the independent running environment corresponding to the specified user identifier, the package management module 505 returns successful uninstallation to the desktop.

For example, after uninstalling the application in the independent running environment corresponding to the screen selected by the user, the package management module 505 may return, to the desktop corresponding to the secondary screen of the head unit 200, prompt information indicating that uninstallation succeeds.

S1208b: Delete the icon of the uninstalled application from the desktop corresponding to the screen for uninstallation selected by the user.

For example, after the application is uninstalled, the icon of the application may be deleted from the desktop in the independent running environment of the screen for uninstallation selected by the user, that is, the icon of the uninstalled application is deleted from the desktop corresponding to the screen selected by the user.

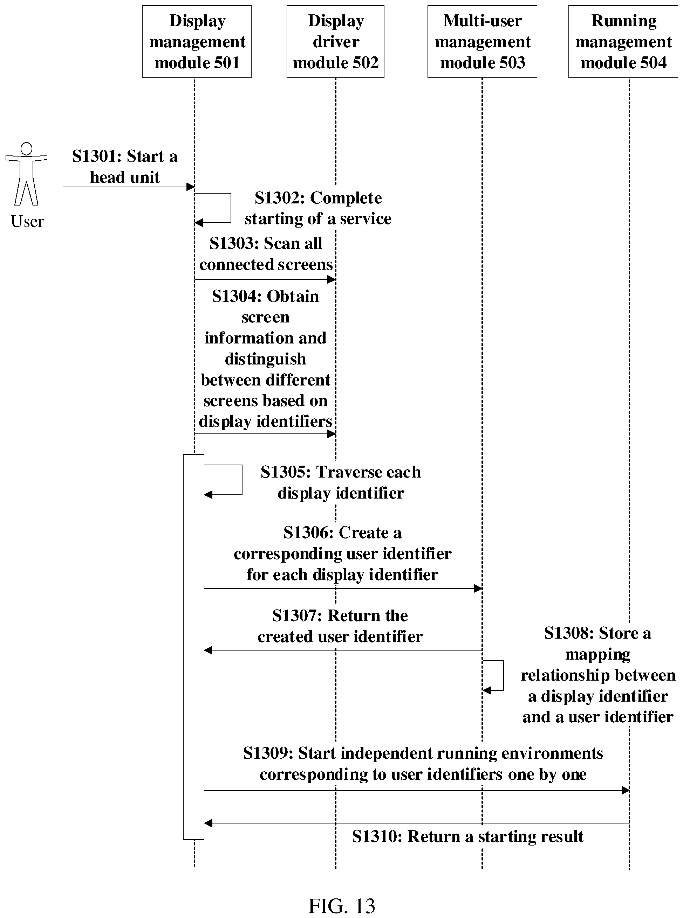

FIG. 13 is a module interaction diagram of starting an application in an independent running environment corresponding to a secondary screen by the head unit 200 described in step S601 to step S603 in FIG. 6. In the module interaction diagram shown in FIG. 13, the following steps may be performed by the display management module 501, the display driver module 502, the multi-user management module 503, and the running management module 504 at the application framework layer of the head unit 200 shown in FIG. 5.

S1301: Start the head unit 200.

For example, a user may press a power switch of the head unit to start the head unit. In some embodiments, the head unit may alternatively be automatically started in response to an operation that the user starts a vehicle.

S1302: The display management module 501 determines that starting of a service is completed.

For example, the service herein may be a system service and an application service that need to be started in an operating system of the head unit 200 after the head unit 200 is started, for example, a process management service, a memory management service, and a view system of the operating system of the head unit 200.

S1303: The display driver module 502 scans all screens connected to the head unit 200.

For example, the display management module 501 may control the display driver module 502 to scan all screens connected to the head unit 200 in a wired or wireless manner.

S1304: The display driver module 502 obtains screen information and distinguishes between different screens based on display identifiers.

For example, the screen information herein may include a product number of a screen, a manufacturer number of the screen, a size of the screen, a resolution of the screen, and the like. The display driver module 502 may determine a display identifier (display ID) of a corresponding screen based on the screen information.

S1305: The display management module 501 traverses each display identifier.

For example, the display management module 501 may traverse each determined display identifier. In some embodiments, the display management module 501 may further determine whether a display identifier is unique.

S1306: The multi-user management module 503 creates a corresponding user identifier for each display identifier.

For example, the display management module 501 may create a user identifier corresponding to screen information (a display identifier) of each screen. The user identifier herein may be used as a primary user or a sub-user to log in to the operating system of the head unit 200, and start one independent running environment in the operating system of the head unit 200.

S1307: The multi-user management module 503 returns the created user identifier.

For example, the multi-user management module 503 may return the created user identifier to the display management module 501.

S1308: The multi-user management module 503 stores a mapping relationship between a display identifier and a user identifier.

For example, the multi-user management module 503 may store the mapping relationship between a display identifier and a user identifier in an internal memory of the head unit 200. The user identifier herein may be in a one-to-one correspondence with a display identifier (screen information).

S1309: The running management module 504 starts independent running environments corresponding to user identifiers one by one.

For example, the running management module 504 may start independent running environments corresponding to screens one by one based on the screens that are connected to the head unit and that are turned on.

S1310: The running management module 504 returns a starting result.

For example, after the running management module 504 starts the independent running environments corresponding to the screens one by one, the screens may display respective desktops corresponding to the independent running environments.

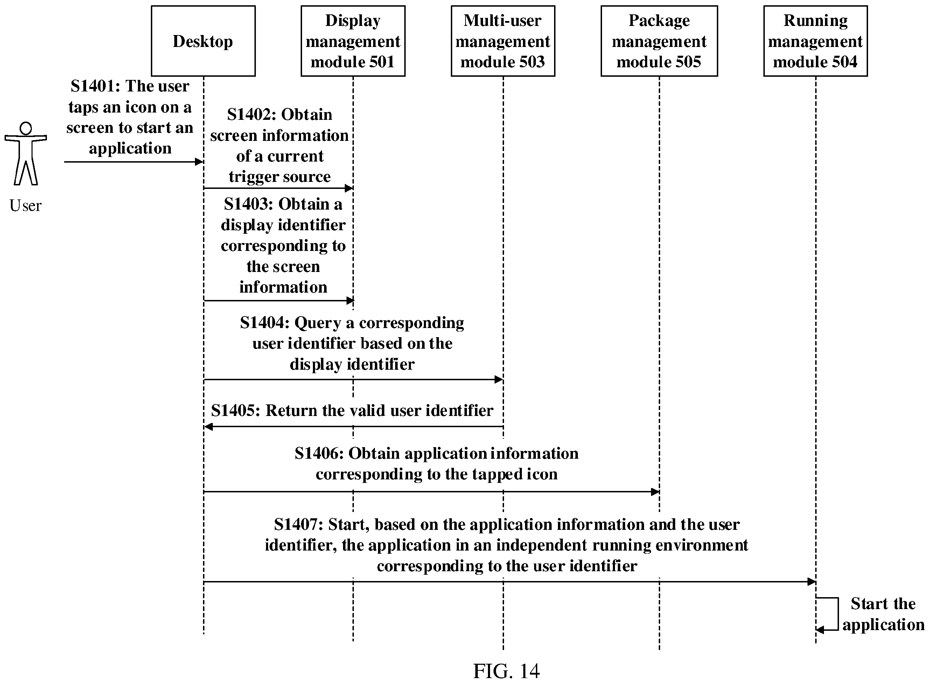

FIG. 14 is a module interaction diagram of starting an application in an independent running environment corresponding to a secondary screen by the head unit 200 described in step S607 in FIG. 6. In the module interaction diagram shown in FIG. 14, the following steps may be performed by the display management module 501, the multi-user management module 503, the running management module 504, and the package management module 505 at the application framework layer of the head unit 200 shown in FIG. 5, and a desktop of the secondary screen of the head unit 200.

S1401: The desktop receives an operation that a user taps an icon on a screen of the head unit 200.

For example, the user taps an icon of a corresponding application on one turned-on secondary screen.

S1402: The display management module 501 obtains screen information for the operation that the user taps the icon.

The screen information herein may include a product number of a screen, a manufacturer number of the screen, a size of the screen, a resolution of the screen, and the like.

S1403: The display management module 501 obtains a display identifier corresponding to the screen information.

For example, the display identifier herein may be a unique identifier determined based on screen information such as a product number of a screen, a manufacturer number of the screen, a size of the screen, and a resolution of the screen.

S 1404: The multi-user management module 503 queries a corresponding user identifier based on the display identifier.

For example, the user identifier is in a one-to-one correspondence with the display identifier corresponding to the screen information, and the user identifier may be used as a primary user or a sub-user for logging in to one independent running environment corresponding to an operating system.

S1405: The multi-user management module 503 returns the user identifier.

For example, the multi-user management module 503 may return the queried user identifier to the desktop corresponding to the secondary screen of the head unit 200.

S1406: The package management module 505 obtains application information corresponding to the icon tapped by the user.

For example, the application information herein may include application information that is used to uniquely determine an application, such as an application name or a package name of the application.

S1407: The running management module 504 starts, based on the application information and the user identifier, the application in an independent running environment corresponding to the user identifier.

For example, the running management module 504 finds, in the independent running environment corresponding to the user identifier, the application based on the application information, starts the application, and displays an application interface of the application on a corresponding screen.

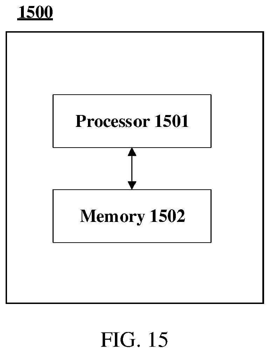

FIG. 15 is a diagram of a structure of an electronic device 1500 according to an embodiment of this application. The electronic device may be specifically a head unit or the like. For example, as shown in FIG. 15, the electronic device 1500 in this embodiment of the present invention may include a processor 1501 (Center Processing Unit, CPU) and a memory 1502. The memory 1502 may include a read-only memory (ROM) and a random access memory (RAM), and provide, for the processor 1501, program instructions and data that are stored in the memory 1502. In some embodiments, the memory 1502 may be configured to store a program or instructions in the multi-screen running method in embodiments of the present invention.

It should be understood that although terms such as "first" and "second" may be used in this specification to describe various features, these features should not be limited by these terms. These terms are merely used for distinction, and shall not be understood as an indication or implication of relative importance. For example, without departing from the scope of example embodiments, a first feature may be referred to as a second feature, and similarly, a second feature may be referred to as a first feature.

Furthermore, various operations will be described as a plurality of separate operations in a manner that is most conducive to understanding illustrative embodiments. However, a described sequence should not be construed as implying that these operations need to depend on the described sequence. A plurality of these operations may be performed in parallel, concurrently, or simultaneously. In addition, the sequence of the operations may alternatively be rearranged. The processing may be terminated when the described operations are completed, but may also have additional operations not included in the figures. The processing may correspond to a method, a function, a procedure, a subroutine, a subprogram, or the like.

References to "an embodiment", "embodiments", "an illustrative embodiment", and the like in this specification indicate that the described embodiment may include a specific feature, structure, or property, but each embodiment may or may not necessarily include the specific feature, structure, or property. In addition, these phrases are not necessarily intended for a same embodiment. In addition, when specific features are described with reference to specific embodiments, knowledge of a person skilled in the art can affect combination of these features with other embodiments, regardless of whether these embodiments are explicitly described.

Unless otherwise stated in the context, terms "contain", "have", and "include" are synonymous. The phrase "A/B" indicates "A or B". The phrase "A and/or B" indicates "A, B, or A and B".

As used in this specification, the term "module" may refer to being a part thereof, or include a memory (a shared memory, a dedicated memory, or a group memory) for running one or more software or firmware programs, an application-specific integrated circuit (ASIC), an electronic circuit and/or a processor (a shared processor, a dedicated processor, or a group processor), a combined logic circuit, and/or another proper component that provides the function.

In the accompanying drawings, some structure or method features may be shown in a specific arrangement and/or order. However, it should be understood that such a specific arrangement and/or order is not required. In some embodiments, these features may be described in a manner and/or order different from that shown in the descriptive accompanying drawings. In addition, structure or method features included in a specific accompanying drawing do not mean that all embodiments need to include such features. In some embodiments, these features may not be included, or these features may be combined with other features.

Embodiments of this application are described above in detail with reference to the accompanying drawings. However, use of the technical solutions of this application is not limited to various applications mentioned in embodiments of this application, and various structures and variations may be easily implemented with reference to the technical solutions of this application, to achieve various beneficial effects mentioned in this specification. Without departing from the purpose of this application, any variation made within the scope of knowledge possessed by a person of ordinary skill in the art shall fall within the scope of this application.

## Claims

1. A multi-screen running method, applied to an electronic device, wherein the electronic device comprises at least a first screen and a second screen, and the method comprises:
allocating a first running environment to the electronic device and displaying the first running environment on the first screen, and allocating a second running environment to the electronic device and displaying the second running environment on the second screen, wherein the first running environment and the second running environment are independent of each other;
installing at least a first application on the electronic device;
when the first application is configured in the first running environment, displaying a first icon of the first application in the first running environment, wherein the first icon is used to start the first application in the first running environment; and
when the first application is configured in the second running environment, displaying a second icon of the first application in the second running environment, wherein the second icon is used to start the first application in the second running environment.

2. The method according to claim 1, wherein the electronic device is a head unit disposed in a vehicle, and the first screen and the second screen are respectively disposed at different positions in the vehicle.

3. The method according to claim 1 or 2, wherein the first screen is a primary screen, and the second screen is a secondary screen.

4. The method according to any one of claims 1 to 3, wherein a unified operating system runs on the electronic device, a first desktop on which a first user logs in to the operating system is used in the first running environment, and a second desktop on which a second user logs in to the operating system is used in the second running environment.

5. The method according to claim 4, wherein the first user is determined based on a display identifier of the first screen, and the second user is determined based on a display identifier of the second screen.

6. The method according to claim 5, wherein the display identifier is determined based on at least one of a product number of a corresponding screen, a manufacturer number of the corresponding screen, a size of the screen, and a resolution of the screen.

7. The method according to any one of claims 1 to 6, wherein the allocating a first running environment to the electronic device and displaying the first running environment on the first screen comprises:
automatically turning on the first screen in response to a first operation that a user turns on the electronic device; and
running, by the electronic device, the first running environment and displaying the first running environment on the first screen.

8. The method according to any one of claims 1 to 7, wherein the allocating a second running environment to the electronic device and displaying the second running environment on the second screen comprises:
in response to a second operation that a user turns on the second screen, running, by the electronic device, the second running environment and displaying the second running environment on the second screen.

9. The method according to any one of claims 1 to 8, wherein the displaying a second icon of the first application in the second running environment comprises:
generating a copy of the first application for the second running environment.

10. The method according to any one of claims 4 to 6, wherein that the first icon is used to start the first application in the first running environment comprises:
responding to a third operation performed by a user on the first icon; and
starting the first application, wherein the first application is bound to a first process identifier based on the first user; and
that the second icon is used to start the first application in the second running environment comprises:
responding to a fourth operation performed by a user on the second icon; and
starting the first application, wherein the first application is bound to a second process identifier based on the second user.

11. The method according to any one of claims 1 to 10, wherein when the first application is configured in the first running environment, after the displaying a first icon of the first application in the first running environment, the method further comprises:
in response to a fifth operation performed by a user on the first icon, wherein the fifth operation indicates to install the first application in the second running environment, configuring the first application in the second running environment and displaying the second icon.

12. The method according to any one of claims 1 to 11, wherein the installing at least a first application on the electronic device comprises:
in response to a sixth operation that a user downloads the first application from an application store, installing the first application on the electronic device;
in response to that the user chooses to install the first application in the first running environment, configuring the first application in the first running environment and displaying the first icon; and/or
in response to that the user chooses to install the first application in the second running environment, configuring the first application in the second running environment and displaying the second icon.

13. The method according to any one of claims 1 to 12, wherein when the first application is configured in the first running environment, after the displaying a first icon of the first application in the first running environment, the method further comprises:
in response to a seventh operation performed by a user on the first icon, wherein the seventh operation indicates to uninstall the first application, canceling configuration of the first application in the first running environment and/or the second running environment, deleting the first icon and/or the second icon, and deleting the first application from the electronic device.

14. The method according to any one of claims 1 to 12, wherein when the first application is configured in the first running environment, after the displaying a first icon of the first application in the first running environment, the method further comprises:
in response to an eighth operation performed by a user on the first icon, wherein the eighth operation indicates to uninstall the first application in the first running environment and/or the second running environment, when the user chooses to uninstall the first application in the first running environment, canceling configuration of the first application in the first running environment and deleting the first icon; and when the user chooses to uninstall the first application in the second running environment, canceling configuration of the first application in the second running environment and deleting the second icon.

15. The method according to any one of claims 1 to 12, wherein when the first application is configured in the second running environment, after the displaying a second icon of the first application in the second running environment, the method further comprises:
in response to a ninth operation performed by a user on the second icon, wherein the ninth operation indicates to uninstall the first application, canceling configuration of the first application in the second running environment and deleting the second icon.

16. An electronic device, comprising:
a memory, configured to store instructions executed by one or more processors of the electronic device; and
a processor, one of the processors of the electronic device, configured to perform the multi-screen running method according to any one of claims 1 to 15.

17. A computer-readable storage medium, wherein the computer-readable storage medium stores a computer program or instructions, and when the computer program or the instructions are executed on an electronic device, the electronic device is enabled to perform the multi-screen running method according to any one of claims 1 to 15.
